# EUROPEAN PATENT APPLICATION

(11) **EP 4 790 539 A1**
(43) Date of publication of application: **12.08.2026**
(21) Application number: 26156551.9
(22) Date of filing: 05.02.2026
(51) Int. Cl.: G06F 3/12

(54) **PRINTING APPARATUS, CONTROL METHOD THEREFOR, PRINTING SERVER SYSTEM, AND PRINTING SYSTEM**

(30) Priority: 06.02.2025 JP 2025018544
(71) Applicant: Canon Kabushiki Kaisha, Tokyo 146-8501 (JP)
(72) Inventor: SAKO, Ritsuto, Ohta-ku, Tokyo 146-8501 (JP)
(74) Representative: TBK

(57) **Abstract**

A printing apparatus (120) communicates with a printing server system (130) that provides a cloud printing service that receives a print job for a comprehensive logical printer (801) associated with a plurality of printing apparatuses (803a-803c). The printing apparatus (120) determines whether the printing apparatus (120) has a permission to execute printing according to a print job input to the comprehensive logical printer (801), transmits, as capability information of the printing apparatus (120), a message indicating that the printing apparatus (120) does not have the permission to the printing server system (130), based on a determination that the printing apparatus (120) does not have the permission, and executes printing according to a print job obtained from the printing server system (130).

## Description

### TECHNICAL FIELD

The present disclosure relates to a printing apparatus, a control method therefor, a printing server system, and a printing system.

### BACKGROUND

A printing method in which a printing server receives a print job from a client and then transmits the print job to a printing apparatus in response to a request from a user (i.e., pull printing) has been developed for practical application. Japanese Patent Laid-Open No. 2018-156392 describes a technology in which, at the time of pull printing, whether or not printing is possible is determined based on the processing power of the printer performing pull printing and the attributes of the accumulated print file. Some printing servers provide a logical printer associated with a plurality of printing apparatuses. A print job input to such a logical printer is held at the printing server until a printing apparatus is designated by a user, and is then transmitted to the printing apparatus designated by the user.

### SUMMARY

Pull printing that uses a printing server that does not provide a logical printer associated with a plurality of printing apparatuses is provided as a paid service. Thus, a user may feel that it is unfair when printing using a logical printer associated with a plurality of printing apparatuses can be executed for free. According to some aspects of the present disclosure, printing using a logical printer associated with a plurality of printing apparatuses can be restricted to the case where the user has a permission.

The present disclosure in its first aspect provides a printing apparatus as specified in claim 1. Optional features are specified in claim 2 to 9. The present disclosure in its second aspect provides a method as specified in claim 10. The present disclosure in its third aspect provides a computer program as specified in claim 11. The present disclosure in its fourth aspect provides a printing server as specified in claim 12. The present disclosure in its fifth aspect provides a printing system as specified in claim 13.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a schematic view for describing an example of the configuration of a printing system according to some embodiments.
FIG. 2 is a block diagram for describing an example of the hardware configuration of a computer according to some embodiments.
FIG. 3 is a block diagram for describing an example of the functional configuration of a printing server according to some embodiments.
FIG. 4 is a block diagram for describing an example of the functional configuration of an information processing apparatus according to some embodiments.
FIG. 5 is a block diagram for describing an example of the hardware configuration of a printing apparatus according to some embodiments.
FIG. 6 is a block diagram for describing an example of the functional configuration of a printing apparatus according to some embodiments.
FIG. 7 is a sequence diagram for describing the overall processing of cloud printing according to some embodiments.
FIG. 8 is a schematic view for describing an example of a comprehensive logical printer and an individual logical printer according to some embodiments.
FIG. 9 is a flow diagram for describing an example of a control method for a printing apparatus according to some embodiments.
FIG. 10 is a flow diagram for describing an example of another control method for a printing apparatus according to some embodiments.
FIG. 11 is a flow diagram for describing an example of another control method for a printing apparatus according to some embodiments.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### Printing System Configuration Example

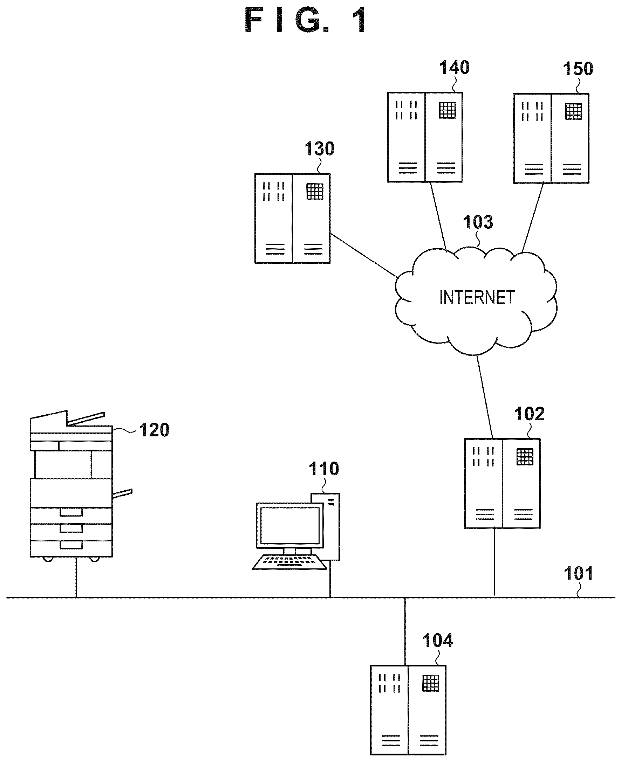

An example of the configuration of a printing system according to some embodiments will now be described with reference to FIG. 1. The printing system may be configured by an information processing apparatus 110 and a printing apparatus 120. Alternatively, the printing system may be configured by the information processing apparatus 110, the printing apparatus 120, and a printing server 130. The printing system may be configured by another combination of the component elements illustrated in FIG. 1 and may include component elements not illustrated in FIG. 1.

The information processing apparatus 110 and the printing apparatus 120 are connected to the same local area network (LAN) 101. The LAN 101 may be a wired LAN, a wireless LAN, or a combination thereof. The LAN 101 is connected to the Internet 103 via a firewall 102. The printing server 130 is also connected to the internet 103. The internet 103 may be a wide area network, a cellular network, a local area network, another network, or any combination of these networks. The information processing apparatus 110 and the printing apparatus 120 can communicate with one another in the LAN 101 (in other words, without using the internet 103). The information processing apparatus 110 and the printing apparatus 120 can communicate with the printing server 130 via the LAN 101, the firewall 102, and the internet 103.

The printing apparatus 120 includes a print function for printing according to a print job. The printing apparatus 120 may include at least one of a scanner function and a fax function in addition to the print function. Such a printing apparatus with a plurality of functions may be referred to as a Multifunction Peripheral (MFP). Alternatively, the printing apparatus 120 may be a Single Function Peripheral (SFP) with only the print function. Printing may refer to printing on a sheet-like printing medium such as paper or the forming of three-dimensional objects (so-called 3D printing).

The printing server 130 provides a printing service that transmits a print job to any one of one or more printing apparatuses (for example, the printing apparatus 120) registered in the printing server 130 according to the print job generated by the information processing apparatus 110. For example, the printing server 130 provides a logical printer to the information processing apparatus 110 and receives a print job for the logical printer. A logical printer is a virtual printing apparatus (for example, a printer object) provided by the printing server 130. A logical printer may be referred to as a cloud printer. The information processing apparatus 110 can generate a print queue for the logical printer. In contrast to the logical printer, a physical printing apparatus such as the printing apparatus 120 may be referred to as a physical printer. Hereinafter, logical printers and physical printers are collectively referred to as simply printers. A physical printer may be referred to as a local printer in a case where it is connected to the same LAN as the information processing apparatus that inputs the print job. The printing server 130 may be configured by a single server or may be configured by a plurality of servers. Thus, the printing server 130 may be referred to as a printing server system.

The printing server 130 may be a server in an on-premises environment connected to the internet 103 or may be a server in a cloud computing environment (referred to below simply as the cloud). A printing service provided by the printing server 130 in the cloud may be referred to as a cloud printing service. An example of a cloud printing service includes Universal Print (registered trademark) provided by Microsoft Corporation. In the examples described below, the printing server 130 is in the cloud. However, the following description also applies in a similar manner to an example in which the printing server 130 is in an on-premises environment.

The information processing apparatus 110 provides a print function to the user of the information processing apparatus 110. The information processing apparatus 110 may be a personal computer (PC), may be a smartphone, or may be another device. The information processing apparatus 110 may designate a physical printer (for example, the printing apparatus 120) connected to the same LAN 101 as the output destination of the printed material. Printing performed when a print job is directly (in other words, via the LAN) input to the physical printer may be referred to as local printing.

The information processing apparatus 110 may designate the logical printer provided by the printing server 130 as the output destination of the printed material. In a case where the logical printer is designated as the output destination, the physical printer (for example, the printing apparatus 120) associated with the logical printer performs the printing. The information processing apparatus 110 that uses the cloud printing service may be referred to as a client or a client terminal. The printing performed when a print job is input to the logical printer may be referred to as cloud printing or remote printing. The printing performed when a print job is input to the logical printer may be executed by the printing apparatus 120 connected to the same LAN 101 as the information processing apparatus 110 or may be executed by a printing apparatus not connected to the LAN 101.

In the example of FIG. 1, the information processing apparatus 110 can execute both local printing and remote printing. Alternatively, the information processing apparatus 110 may be able to execute only one of local printing and remote printing.

A printing server 104 is also connected to the LAN 101. The printing server 104 uses a printing apparatus (for example, the printing apparatus 120) connected to the same network (in other words, the LAN 101) and provides a printing service to an information processing apparatus (for example, the information processing apparatus 110) connected to the same network. A printing service provided in such a single network may be referred to as a local printing service. Examples of a local printing service include Anyplace Print for MEAP ADVANCE (registered trademark) provided by Canon Marketing Japan Inc.

A printing server 140 is also connected to the internet 103. The printing server 140 is a printing server that provides a printing service that is different from the printing service provided by the printing server 130. An example of a printing service provided by the printing server 140 is uniFLOW Online provided by Canon Marketing Japan Inc. The printing service provided by the printing server 140 may be a cloud printing service.

A license server 150 is also connected to the internet 103. The license server 150 is a server for managing licenses for the printing apparatus 120 to execute paid operations (for example, use of a specific service or function). A license is a permission to use granted by the provider of the specific service or function. The printing apparatus 120 comes to have permission to execute a specific operation by a license being granted to the printing apparatus 120. In FIG. 1, only the single license server 150 is illustrated, but a plurality of license servers may exist, such as license servers for license issuers and also for each type of license. A portion of the plurality of license servers may be connected to the LAN 101.

### Computer Hardware Configuration Example

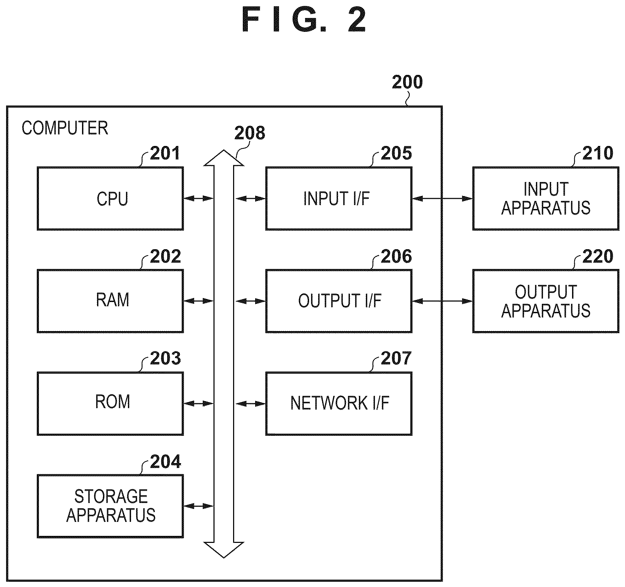

An example of the hardware configuration of a computer 200 according to the present embodiment will now be described with reference to FIG. 2. The computer 200 may be used as any one of the printing server 104, the information processing apparatus 110, the printing server 130, the printing server 140, and the license server 150. The computer 200 may include the component elements illustrated in FIG. 2, may not include one or more of the component elements illustrated in FIG. 2, and may include a component element not illustrated in FIG. 2.

A central processing unit (CPU) 201 is general-purpose processing circuitry that controls the entire operations of the computer 200. A random-access memory (RAM) 202 is volatile memory circuitry used as a temporary storage area such as a working area for processing by the CPU 201. A read-only memory (ROM) 203 is non-volatile memory circuitry that stores programs and data used in the processing by the CPU 201. A storage apparatus 204 is a non-volatile storage apparatus that stores programs and data used in the processing by the CPU 201. The storage apparatus 204 may be a hard disk drive (HDD) or a solid state drive (SSD), for example. The storage apparatus 204 may be referred to as a secondary storage apparatus. The operations by the computer 200 may be implemented by the CPU 201 executing a program read from the storage apparatus 204 into the RAM 202.

An input interface (I/F) 205 is an I/F for exchanging signals with an input apparatus 210. The input apparatus 210 is an apparatus that obtains input from the user of the computer 200. The input apparatus 210 may be a keyboard, a touch panel, a microphone, a mouse, or any combination thereof, for example. An output I/F 206 is an I/F for exchanging signals with an output apparatus 220. The output apparatus 220 is an apparatus that provides information to the user of the computer 200. The output apparatus 220 may be a display, a speaker, or any combination thereof, for example. A network I/F 207 is an I/F for communicating with an apparatus external to the computer 200. Each of the CPU 201, the RAM 202, the ROM 203, the storage apparatus 204, the input I/F 205, the output I/F 206, and the network I/F 207 are connected to a system bus 208. In the example of FIG. 2, the input apparatus 210 and the output apparatus 220 are illustrated as apparatuses that are separate from the computer 200. Alternatively, the computer 200 may include the input apparatus 210 and the output apparatus 220.

### Printing Server Functional Configuration Example

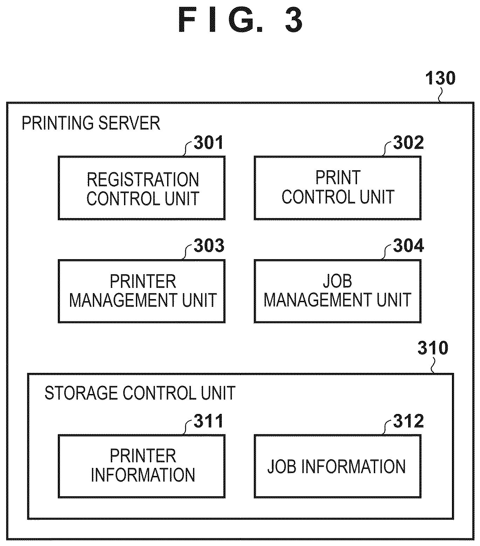

An example of the functional configuration of the printing server 130 will now be described with reference to FIG. 3. The printing server 130 may include the component elements illustrated in FIG. 3, may not include one or more of the component elements illustrated in FIG. 3, and may include a component element not illustrated in FIG. 3. Each component element of FIG. 3 may be implemented by the CPU 201 executing a program loaded into the RAM 202. Alternatively, one or more or all of the component elements of FIG. 3 may be implemented by dedicated processing circuitry such as an application specific integrated circuit (ASIC) or the like. The printing servers 104 and 140 may also have a similar configuration to the printing server 130.

A registration control unit 301 executes processing for registering a logical printer. For example, in response to a registration start request from the printing apparatus 120, the registration control unit 301 generates a logical printer associated with a physical printer and registers it in printer information 311. The logical printer registered in the printer information 311 is recognized as a printer by the information processing apparatus 110. The physical printer associated with the logical printer may be a physical printer that performs printing according to a print job input to the logical printer. The logical printer may be associated with only one physical printer. The physical printer may be associated with only one logical printer or may be associated with a plurality of logical printers.

A print control unit 302 executes processing related to a print job for the logical printer. For example, the print control unit 302 receives a print job for the logical printer from the information processing apparatus 110 and, based on this, transmits the print job to the physical printer associated with the logical printer. Also, the print control unit 302 may control events related to print jobs. An event related to a print job may include receiving a print job and the like, for example. The print control unit 302 may return an event related to the physical printer in response to receiving an event request from the physical printer.

A printer management unit 303 manages the information related to the logical printer registered in the printing server 130 as the printer information 311. The printer information 311 includes the hardware IDs of physical printers associated with logical printers, capability information of physical printers associated with logical printers, cloud printer IDs uniquely allocated to logical printers, information of a print queue for spooling print jobs, and the like.

A job management unit 304 manages the information related to the print job received from the information processing apparatus 110 as job information 312. The job information 312 includes the print job information and state, print data designated by the print job, and the like.

A storage control unit 310 stores information in the RAM 202 and the storage apparatus 204 and reads out information from the RAM 202 and the storage apparatus 204 according to instructions from other component elements. According to some embodiments, the storage control unit 310 stores the printer information 311 and the job information 312.

### Information Processing Apparatus Functional Configuration Example

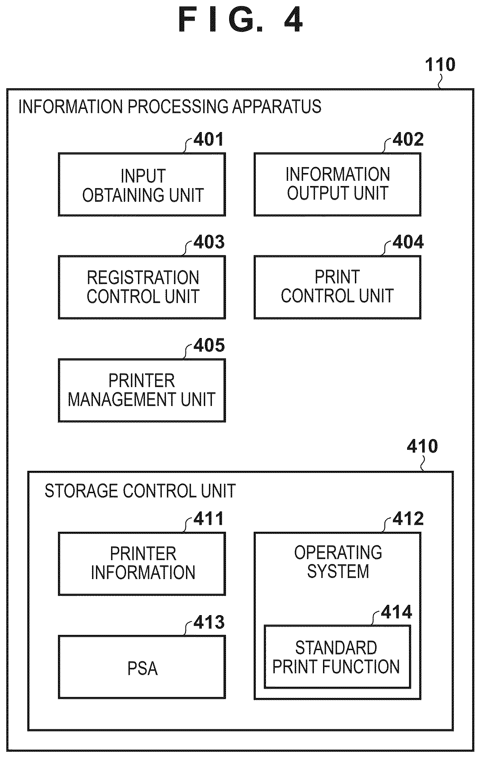

An example of the functional configuration of the information processing apparatus 110 will now be described with reference to FIG. 4. The information processing apparatus 110 may include the component elements illustrated in FIG. 4, may not include one or more of the component elements illustrated in FIG. 4, and may include a component element not illustrated in FIG. 4. Each component element of FIG. 4 may be implemented by the CPU 201 executing a program loaded into the RAM 202. Alternatively, one or more or all of the component elements of FIG. 4 may be implemented by dedicated processing circuitry such as an ASIC or the like.

An input obtaining unit 401 obtains input from the user of the information processing apparatus 110 using the input I/F 205. An information output unit 402 outputs information to the user of the information processing apparatus 110 using the output I/F 206.

A registration control unit 403 executes processing for registering the logical printer in the printing server 130. A print control unit 404 executes processing related to printing by a printer. For example, the print control unit 404 may transmit a print job to a logical printer registered in the printing server 130 according to a printing instruction from the user of the information processing apparatus 110. The print control unit 404 may directly (in other words, via the same LAN) transmit a print job to a physical printer according to a printing instruction from the user of the information processing apparatus 110.

A printer management unit 405 manages, as printer information 411, information related to printers to which a print job can be input by the information processing apparatus 110. The printer information 411 includes the capability information of the printer and the like. The printer management unit 405 may search for a printer to which a print job can be input by the information processing apparatus 110.

A storage control unit 410 stores information in the RAM 202 and the storage apparatus 204 and reads out information from the RAM 202 and the storage apparatus 204 according to instructions from other component elements. According to some embodiments, the storage control unit 410 stores the printer information 411 and an operating system (OS) 412. The OS 412 is installed as standard in the information processing apparatus 110 (in other words, at the time of shipping the information processing apparatus 110). The OS 412 may be updated. The OS 412 includes a function for basic management and control of the information processing apparatus 110. The OS 412 includes a standard print function 414.

The storage control unit 410 may further store a print support application (PSA) 413. The PSA413 is an application (plugin) that provides extended print settings to the information processing apparatus 110. The PSA 413 is installed on the OS 412. The PSA 413 is provided by a vendor. The PSA 413 enables a print setting not supported by the standard print function 414 to be used by the user of the information processing apparatus 110.

### Printing Apparatus Hardware Configuration Example

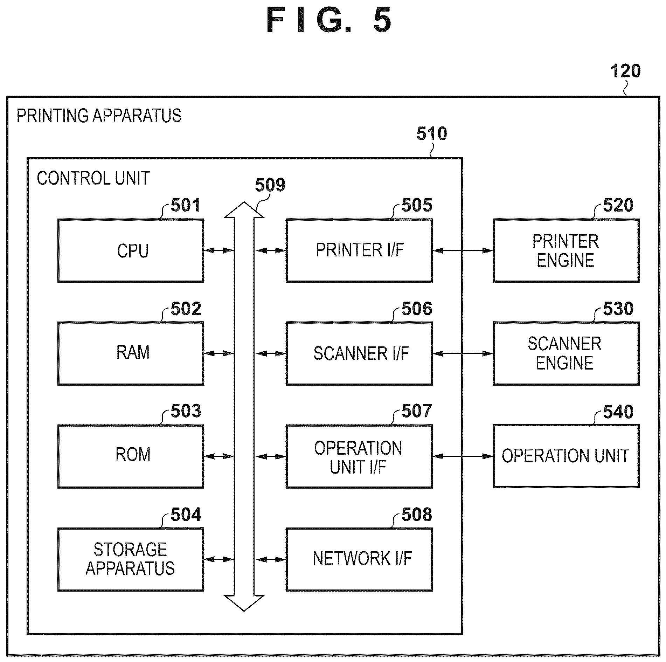

An example of the hardware configuration of the printing apparatus 120 according to some embodiments will now be described with reference to FIG. 5. The printing apparatus 120 may include the component elements illustrated in FIG. 5, may not include one or more of the component elements illustrated in FIG. 5, and may include a component element not illustrated in FIG. 5. The printing apparatus 120 is a physical printing apparatus and thus may be referred to as a physical printer.

A CPU 501 is general-purpose processing circuitry that controls the entire operations of the printing apparatus 120. A RAM 502 is volatile memory circuitry used as a temporary storage area such as a working area for processing by the CPU 501. A ROM 503 is non-volatile memory circuitry that stores programs and data used in the processing by the CPU 501. A storage apparatus 504 is a non-volatile storage apparatus that stores programs and data (for example, print jobs, image data, settings information, and hardware IDs) used in processing by the CPU 501. The storage apparatus 504 may be a HDD or an SSD, for example. The storage apparatus 504 may be referred to as a secondary storage apparatus. The operations by the printing apparatus 120 may be implemented by the CPU 501 executing a program read from the storage apparatus 504 into the RAM 502.

A printer I/F 505 is an I/F for exchanging signals with a printer engine 520. The printer engine 520 performs printing based on a signal (for example, an image signal or a print command) supplied from a control unit 510 via the printer I/F 505. The printing may be electro-photographic printing in which toner is transferred and fixed onto paper, inkjet printing in which printing is performed by ink being discharged onto paper, or three-dimensional printing.

A scanner I/F 506 is an I/F for exchanging signals with a scanner engine 530. The scanner engine 530 supplies a signal (for example, an image signal) obtained by a document being scanned to the control unit 510 via the scanner I/F 506. The CPU 501 may process the image signal supplied from the scanner engine 530 and supply the printing image signal obtained in this manner to the printer engine 520. Also, the CPU 501 may generate image data based on the image signal supplied from the scanner engine 530 and transmit the image data to an external apparatus.

An operation unit I/F 507 is an I/F for exchanging signals with an operation unit 540. The operation unit 540 is an apparatus that obtains an input from the user of the printing apparatus 120 and provides information to the user of the printing apparatus 120. The operation unit 540 may be constituted by a display panel (for example, a liquid crystal display), a speaker, a touch panel, a keyboard, a button, a touch screen, or any combination thereof, for example.

A network I/F 508 is an I/F for communicating with an apparatus external to the printing apparatus 120. The control unit 510 is constituted by the CPU 501, the RAM 502, the ROM 503, the storage apparatus 504, the printer I/F 505, the scanner I/F 506, the operation unit I/F 507, and the network I/F 508. Each component element included in the control unit 510 is connected to a system bus 509.

### Printing Apparatus Functional Configuration Example

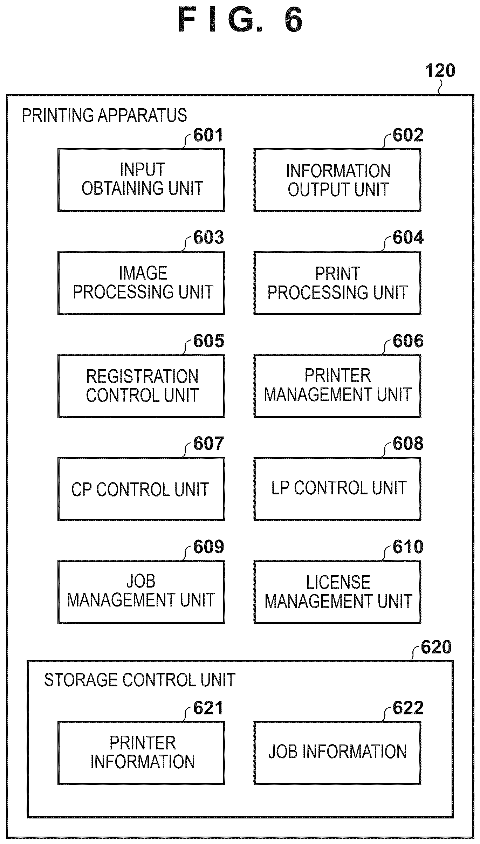

An example of the functional configuration of the printing apparatus 120 will now be described with reference to FIG. 6. The printing apparatus 120 may include the component elements illustrated in FIG. 6, may not include one or more of the component elements illustrated in FIG. 6, and may include a component element not illustrated in FIG. 6. Each component element of FIG. 6 may be implemented by the CPU 501 executing a program loaded into the RAM 502. Alternatively, one or more or all of the component elements of FIG. 6 may be implemented by dedicated processing circuitry such as an ASIC or the like.

An input obtaining unit 601 obtains an input from the user of the printing apparatus 120 using the operation unit I/F 507. An information output unit 602 outputs information to the user of the printing apparatus 120 using the operation unit I/F 507. For example, the information output unit 602 displays an operation menu on the operation unit 540. The input obtaining unit 601 obtains an input on the operation menu and notifies the other component elements of the input instruction content. The information output unit 602 displays the result obtained from the other component elements on the operation unit 540.

An image processing unit 603 performs rendering of the print job into image data for printing. A print processing unit 604 prints the image data rendered by the image processing unit 603.

A registration control unit 605 executes processing for registering a logical printer associated with the printing apparatus 120 in the printing server 130. A printer management unit 606 manages the information related to the printing apparatus 120 as printer information 621. The printer information 621, for example, may include the state of the printing apparatus 120, the capability information of the printing apparatus 120, the hardware ID of the printing apparatus 120, and the cloud printer ID uniquely allocated to the logical printer associated with the printing apparatus 120 by the printing server 130. Also, the printer information 621 may include a local printer ID for the information processing apparatus 110 to identify the printing apparatus in the same LAN 101. The capability information of the printing apparatus 120 is information related to the capability of the printing apparatus 120 and may include that the printing apparatus 120 includes a specific function, for example.

A cloud printing (CP) control unit 607 executes processing related to cloud printing. For example, the CP control unit 607 may transfer print data included in a print job received from the printing server 130 to the image processing unit 603 to perform printing according to the print job transmitted from the printing server 130. Also, the CP control unit 607 may transmit an event request to the printing server 130.

A local printing (LP) control unit 608 executes processing related to local printing. For example, the LP control unit 608 may respond to a printer search from the information processing apparatus 110. Also, the LP control unit 608 may transfer print data included in a print job directly received from the information processing apparatus 110 to the image processing unit 603 to perform printing according to the print job transmitted from the information processing apparatus 110. A job management unit 609 manages the information related to the print job as job information 622. The job information 622 may include the processing state and processing result of a print job.

A license management unit 610 manages licenses granted to the printing apparatus 120. For example, the license management unit 610 stores license keys input using the operation unit 540 in the storage apparatus 504, stores license files received from external apparatuses in the storage apparatus 504, and the like. Also, when a specific operation that requires permission is executed, the license management unit 610 determines whether or not a license is stored in the storage apparatus 504 and determines that the printing apparatus 120 does not have the permission in a case where the license is not stored. The license management unit 610 may query the license server 150 as to whether or not the license is granted to the printing apparatus 120 instead of or in addition to determining based on the license stored in the storage apparatus 504.

A storage control unit 620 stores information in the RAM 502 and the storage apparatus 504 and reads out information from the RAM 502 and the storage apparatus 504 according to instructions from other component elements. According to some embodiments, the storage control unit 620 stores the printer information 621 and the job information 622. The storage control unit 620 may manage data as a file system. The storage control unit 620 may divide the storage destination of each piece of data between the storage apparatus 504, the non-volatile area, and the RAM 502, the volatile area. For example, the storage control unit 620 may store the printer information 621 and the job information 622 in a non-volatile area.

### Overall Processing Sequence for Cloud Printing

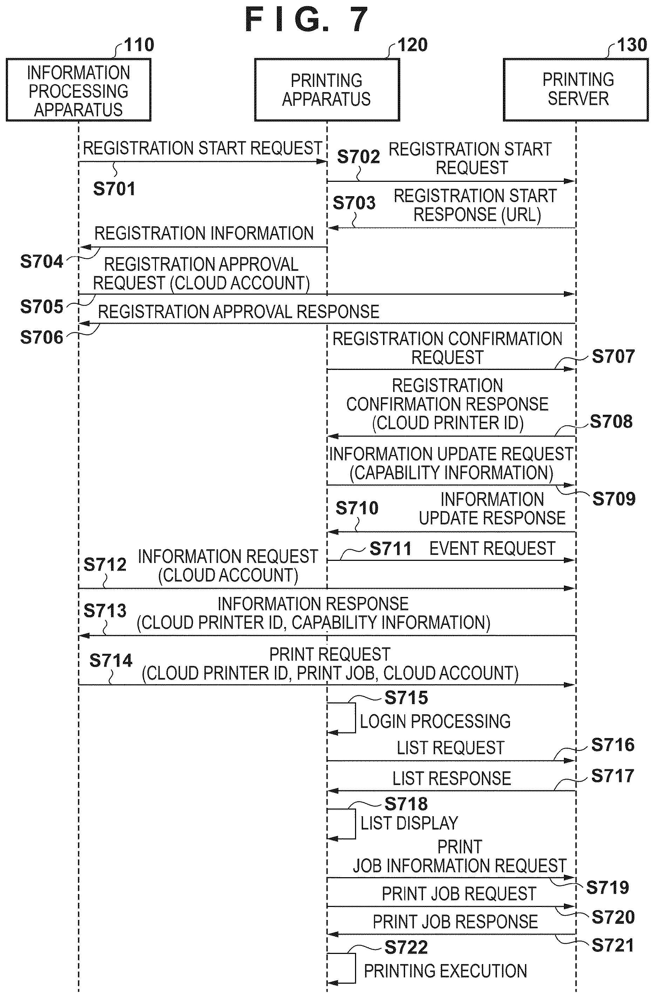

The overall processing sequence for performing cloud printing will now be described with reference to FIG. 7. In the example of FIG. 7, the information processing apparatus 110 registers the printing apparatus 120 in the printing server 130 and inputs a print job to the logical printer associated with the printing apparatus 120. Registering the printing apparatus 120 in the printing server 130 may refer to registering a logical printer associated with the printing apparatus 120 in the printing server 130. In the following example, the printing apparatus 120 supports a web user interface (UI) function for operating the printing apparatus 120 from the information processing apparatus 110. Also, the information processing apparatus 110 supports a web UI client function. The communication between the information processing apparatus 110, the printing apparatus 120, and the printing server 130 may be performed using the Internet Printing Protocol (IPP).

In S701, the registration control unit 403 of the information processing apparatus 110 transmits a registration start request to the printing apparatus 120 according to an instruction from the user of the information processing apparatus 110. The registration start request may be a request to start the processing for registering the printing apparatus 120 in the printing server 130. The registration start request may be transmitted using the web UI client function of the information processing apparatus 110.

In S702, the registration control unit 605 of the printing apparatus 120 transmits the registration start request to the printing server 130 in response to receiving the registration start request from the information processing apparatus 110. The registration start request may be a request to start the processing for registering the printing apparatus 120 in the printing server 130.

In S703, the registration control unit 301 of the printing server 130 transmits the registration start response to the printing apparatus 120 in response to receiving the registration start request from the printing apparatus 120. The registration start response includes the uniform resource locator (URL) of the webpage for the user of the information processing apparatus 110 to input information for registering the printing apparatus 120 in the printing server 130.

In S704, the registration control unit 605 of the printing apparatus 120 transmits the registration information to the information processing apparatus 110 in response to receiving the registration start response from the printing server 130. The registration information includes the URL included in the registration start response. The information output unit 402 of the information processing apparatus 110 displays the webpage to the user in response to receiving the registration information from the printing apparatus 120.

In S705, the registration control unit 403 of the information processing apparatus 110 transmits a registration approval request to the printing server 130 in response to the user of the information processing apparatus 110 accessing the URL and inputting the information required for registration. The registration approval request includes the cloud account of the user of the information processing apparatus 110. A cloud account is an account for a user to use a tenant of the cloud including the printing server 130.

In S706, the registration control unit 301 of the printing server 130 checks whether or not the cloud account included in the registration approval request is that of a user with permission to register the printing apparatus 120 in the printing server 130. In a case where the user has permission, the registration control unit 301 of the printing server 130 transmits a registration approval response to the information processing apparatus 110. The registration approval response may be a message notifying the user of the information processing apparatus 110 of a result of confirming that the user has permission to register the printing apparatus 120.

In S707, the printer management unit 606 of the printing apparatus 120 transmits a registration confirmation request to the printing server 130 in response to receiving the registration start response from the printing server 130. The registration confirmation request may be a request related to registering the printing apparatus 120 in the printing server 130, and specifically may be a request to register the printing apparatus 120 in the printing server 130.

In S708, the printer management unit 303 of the printing server 130, in response to receiving the registration confirmation request from the printing apparatus 120, generates a new logical printer and adds the logical printer to the printer information 311 in association with the printing apparatus 120. Accordingly, the printing apparatus 120 is registered in the printing server 130, and the information processing apparatus 110 becomes able to perform cloud printing using the logical printer. Also, the printer management unit 303 of the printing server 130 allocates a unique cloud printer ID to the generated logical printer and adds the cloud printer ID to the printer information 311 in association with the logical printer. Thereafter, the registration control unit 301 of the printing server 130 transmits a registration confirmation response to the printing apparatus 120. The registration confirmation response includes the cloud printer ID of the printing apparatus 120.

In S709, the printer management unit 606 of the printing apparatus 120 transmits an information update request to the printing server 130 in response to completion of the registration of the printing apparatus 120 in the printing server 130. The information update request may be a request to update the information related to the printing apparatus 120. The information update request includes the hardware ID of the printing apparatus 120 and the capability information of the printing apparatus 120. The information update request may be transmitted via an Update-Output-Device-Attributes request message specified by the IPP.

In S710, the printer management unit 303 of the printing server 130, based on the hardware ID and the capability information included in the received information update request, updates the information of the printing apparatus 120 included in the printer information 311 and transmits an update information response to the printing apparatus 120. The update information response may be a message for notifying of the successful completion of the update of the information of the printing apparatus 120. The printer management unit 303 of the printing server 130 sets the hardware ID of the printing apparatus 120 as the hardware ID of the logical printer associated with the printing apparatus 120.

In S711, the CP control unit 607 of the printing apparatus 120 transmits an event request to the printing server 130 in response to receiving the registration confirmation response from the printing server 130. The event request may be a request to notify the printing apparatus 120 in a case where an event related to the printing apparatus 120 has occurred. The event request may be related to an event in which a print job has been input to the logical printer associated with the printing apparatus 120.

In S712, the printer management unit 405 of the information processing apparatus 110 transmits an information request to the printing server 130 according to an instruction from the user of the information processing apparatus 110. The information request may be a request for obtaining information related to the logical printer that can be used by the user of the information processing apparatus 110. The information request includes the cloud account of the user of the information processing apparatus 110. The information request may be transmitted via a Get-Printer-Attributes Request message specified by the IPP.

In S713, the printer management unit 303 of the printing server 130 transmits an information response to the information processing apparatus 110 in response to receiving the information request from the information processing apparatus 110. The information response includes the cloud printer ID, the hardware ID, and the capability information for each of the one or more logical printers that the user of the information processing apparatus 110 can use. The printer management unit 405 of the information processing apparatus 110 updates the printer information 411 based on the information response. In this manner, the found logical printer is registered in the standard print function 414 of the information processing apparatus 110. The information response may be transmitted via a Get-Printer-Attributes Response message specified by the IPP.

In S714, the printer management unit 405 of the information processing apparatus 110 transmits a print request to the printing server 130 according to an instruction from the user of the information processing apparatus 110. The print request includes the cloud printer ID, the print job, and the cloud account of the user of the information processing apparatus 110. The print job may include print data and print settings. The print request may be a request for the logical printer having the cloud printer ID included in the print request to print the print data included in the print request. The information processing apparatus 110 may instruct the logical printer registered in the standard print function 414 to print. The printing server 130 allocates an identification number to the received print job and stores the print job in the storage (for example, the storage apparatus 204) of the printing server 130. Also, the printing server 130 updates the job information 312.

In S715, the printing apparatus 120 executes login processing for the user. Specifically, the printing apparatus 120 authenticates the user by determining whether or not the information input by the user using the operation unit 540 matches the information stored in the printing apparatus 120. In a case where user authentication is successful, the printing apparatus 120 may further determine whether or not the user has permission to use the printing apparatus 120.

In response to user login being successful, in S716, the printing apparatus 120 makes a request to the printing server 130 for a list of print jobs associated with the user currently logged into the printing apparatus 120. The print jobs associated with the user currently logged into the printing apparatus 120 include print jobs in a deferred state after being input by the user. The request may be transmitted using an IPP Get-Jobs Request message.

In S717, the printing server 130 responds to the printing apparatus 120 with the list of the print jobs associated with the user designated in S716. The response may be transmitted using an IPP Get-Jobs Response.

In S718, the printing apparatus 120 displays information of the list received in S717 on the operation unit 540. The user designates a print job they wish to execute printing for from the one or more print jobs indicated in the list and issues an instruction to start printing.

In S719, the printing apparatus 120 makes a request to the printing server 130 for information of the print job designated by the user in S718. The printing server 130 receives this request. The request may be transmitted using a Fetch-Job Request message compliant with IPP. The printing server 130 responds with information related to the requested print job in response to the request received in S719. The printing apparatus 120 receives this response. The response may be transmitted using a Fetch-Job Response message compliant with IPP.

In S720, the printing apparatus 120 makes a request to the printing server 130 for the print job designated by the user in S718. The printing server 130 receives this request. The request may be transmitted using an IPP Acknowledge-Job Request message. The printing server 130 transmits an acknowledgement to the request received in S720. The printing apparatus 120 receives this acknowledgement. The acknowledgement may be transmitted using an IPP Acknowledge-Job Response.

In S721, the print control unit 302 of the printing server 130 transmits a print job response to the printing apparatus 120 in response to receiving the print job request from the printing apparatus 120. The print job response includes the cloud account and the print job. The print job response received by the printing apparatus 120 from the printing server 130 may be an IPP Fetch-Job Response message. In S722, the printing apparatus 120 performs printing according to the print job in response to receiving the print job response from the printing server 130 (for example, performs discharge processing).

In the description of FIG. 7, registration of the printing apparatus 120 in steps S701 to S706 and cloud printing in steps S712 to S722 may be performed by the same user or by different users.

### Comprehensive Logical Printer and Individual Logical Printer

A comprehensive logical printer and an individual logical printer provided by the printing server 130 will now be described. In the present embodiment, the printing server 130 may be able to provide a comprehensive logical printer and an individual logical printer. As described above, a logical printer is a virtual printing apparatus (for example, a printer object) provided by the printing server 130. An individual logical printer is a logical printer associated with a specific physical printer. A print job input to an individual logical printer can be printed by the physical printer associated with the individual logical printer. A comprehensive logical printer is a logical printer that is not directly associated with a specific physical printer and is associated with one or more individual logical printers. Typically, a comprehensive logical printer is associated with a plurality of individual logical printers. In this case, the comprehensive logical printer is associated with a plurality of physical printers. A print job input to a comprehensive logical printer moves to one of the individual logical printers associated with the comprehensive logical printer according to an instruction from the user. In other words, a print job input to the comprehensive logical printer is input to any one of the individual logical printers. Thereafter, the print job can be printed by the physical printer associated with the individual logical printer.

The registration control unit 301 of the printing server 130 may be able to register the comprehensive logical printer and the individual logical printer in the printing server 130 according to an instruction from the user (for example, the user of the printing apparatus 120 or the administrator of the printing system) of the printing server 130. For example, as described above, in S708 of FIG. 7, the registration control unit 301 of the printing server 130 registers the logical printer. The logical printer is registered as an individual logical printer due to it being associated with a specific physical printer. Also, in a case where the comprehensive logical printer is already registered with a tenant of the cloud to which the user who registered the physical printer belongs, the registration control unit 301 of the printing server 130 may associate the newly registered individual logical printer with the comprehensive logical printer.

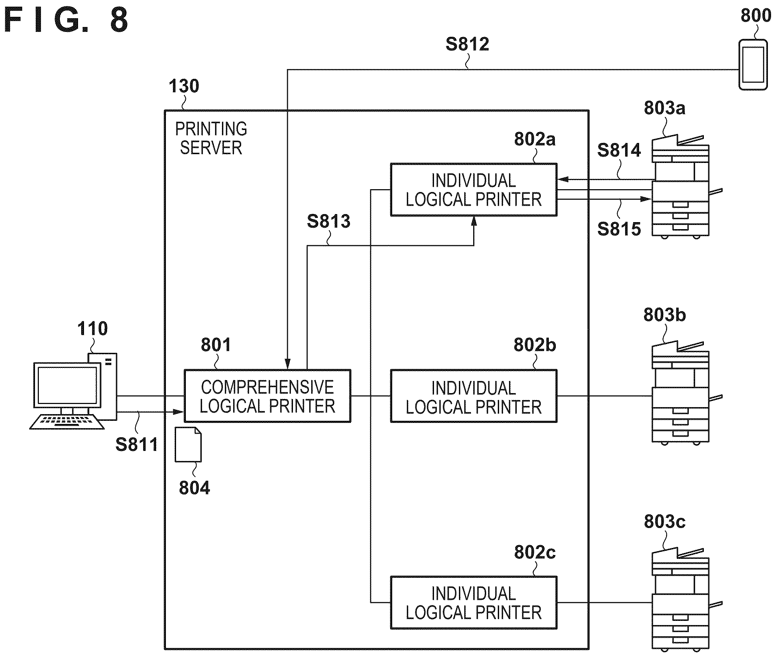

An example of a comprehensive logical printer and an individual logical printer provided by the printing server 130 will now be described with reference to FIG. 8. One comprehensive logical printer 801 and three individual logical printers 802a to 802c are registered in the printing server 130, and the printing server 130 provides these four logical printers. The three individual logical printers 802a to 802c are all associated with the comprehensive logical printer 801. Also, the three individual logical printers 802a to 802c are each individually associated with three physical printers 803a to 803c, respectively. For example, the individual logical printer 802a is associated with only the physical printer 803a of the three physical printers 803a to 803c. The physical printers 803a to 803c may include a configuration similar to that of the printing apparatus 120. The physical printers 803a to 803c may be connected to the same LAN 101 as the information processing apparatus 110 as with the printing apparatus 120. Alternatively, at least one of the physical printers 803a to 803c may not be connected to the same LAN 101 as the information processing apparatus 110.

The processing flow of printing when a print job is input to the comprehensive logical printer 801 will now be described with reference to FIG. 8. In S811, the print control unit 404 of the information processing apparatus 110 inputs a print job 804 to the comprehensive logical printer 801. At this stage, the user of the information processing apparatus 110 does not need to designate which physical printer to use for printing.

In S812, the user that input the print job 804 or another user instructs the printing server 130 to move the print job 804 input to the comprehensive logical printer 801 to the individual logical printer 802a to perform printing via the physical printer 803a. This instruction may be performed using a mobile communication apparatus 800 or may be performed using the physical printer 803a. The instruction includes the identification information (job ID) of the job to be moved and the cloud printer ID of the individual logical printer 802a that is the movement destination.

In S813, the job management unit 304 of the printing server 130 moves the print job 804 from the comprehensive logical printer 801 to the individual logical printer 802a. Accordingly, since the print job 804 is associated with the individual logical printer 802a, the print job 804 can be printed by the physical printer 803a.

In S814, the CP control unit 607 of the physical printer 803a transmits a print job request to the individual logical printer 802a (S814 of FIG. 8). In S815, the print control unit 302 of the printing server 130 transmits a print job response to the physical printer 803a in response to receiving the print job request from the physical printer 803a (S721 of FIG. 7). The print job response includes the print job 804. Thereafter, the print processing unit 604 of the physical printer 803a performs printing based on the print job 804.

In the example described above, the user issues an instruction to move the print job 804 from the comprehensive logical printer 801 to the individual logical printer 802a, but the user may issue an instruction to move the print job 804 to the individual logical printer 802b or 802c. In this case, printing is performed by the physical printer 803b or 803c. In this manner, the user can cause any of the physical printers 803a to 803c to print after the print job 804 has been input to the printing server 130. Such a printing method may be referred to as pull printing that uses a comprehensive logical printer. Also, hereinafter, this printing method may be simply referred to as pull printing.

Next, a processing flow of printing when a print job is input to an individual logical printer (in the following example, the individual logical printer 802a) will be described. The print control unit 404 of the information processing apparatus 110 inputs a print job to the individual logical printer 802a. At this stage, the user of the information processing apparatus 110 has designated the physical printer 803a. Thereafter, the print control unit 302 of the printing server 130 transmits the print job to the physical printer 803a without requiring user intervention. The print processing unit 604 of the physical printer 803a performs printing based on the print job received from the printing server 130. Such a printing method may be referred to as direct printing. The user of the information processing apparatus 110 may be able to issue an instruction to hold the print job input to the individual logical printer at the printing server 130. In this case, the print control unit 302 of the printing server 130 transmits the print job input to the individual logical printer 802a to the physical printer 803a in response to the instruction from the user. Such a printing method may be referred to as secure printing or pull printing that uses an individual logical printer.

### Operation Method of Printing Apparatus

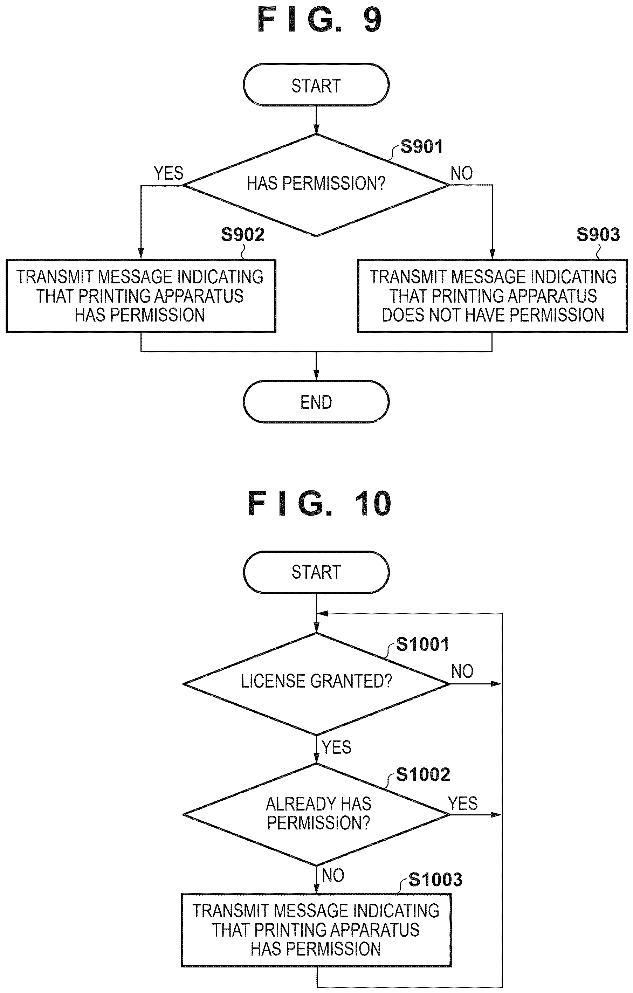

An example of a control method for controlling the printing apparatus 120 in such a manner that the control unit 510 of the printing apparatus 120 transmits a message related to permissions of the printing apparatus 120 to the printing server 130 will now be described with reference to FIG. 9. The processes of the method of FIG. 9 may be performed by the CPU 501 of the printing apparatus 120 executing a program loaded into the memory (for example, the RAM 502) of the printing apparatus 120. Alternatively, one or more or all of the processes of the method of FIG. 9 may be performed by a dedicated integrated circuit such as an ASIC. The method of FIG. 9 may be started when the printing apparatus 120 is activated. Alternatively, the method of FIG. 9 may be started when a different event occurs.

In S901, the license management unit 610 of the printing apparatus 120 determines whether or not the printing apparatus 120 has a permission to execute printing according to a print job input to a comprehensive logical printer (for example, the comprehensive logical printer 801). Hereinafter, a permission for executing printing according to a print job input to a comprehensive logical printer is referred to as a comprehensive pull printing permission. In a case where it is determined that the printing apparatus 120 has a comprehensive pull printing permission ("YES" in S901), the printing apparatus 120 transitions the processing to S902, and in a case where it is determined that the printing apparatus 120 does not have a comprehensive pull printing permission ("NO" in S901), the printing apparatus 120 transitions the processing to S903.

In some embodiments, the license management unit 610 determines whether or not the printing apparatus 120 has a comprehensive pull printing permission based on whether or not a license for executing printing according to a print job input to a comprehensive logical printer has been granted to the printing apparatus 120. Hereinafter, a license for executing printing according to a print job input to a comprehensive logical printer is referred to as a comprehensive pull printing license. The comprehensive pull printing license typically is granted by the provider of the cloud printing service of the printing server 130.

In this embodiment, the license management unit 610 determines that the printing apparatus 120 has a comprehensive pull printing permission based on a comprehensive pull printing license being granted to the printing apparatus 120. The license management unit 610 determines that the printing apparatus 120 does not have a comprehensive pull printing permission based on a comprehensive pull printing license not being granted to the printing apparatus 120.

The comprehensive pull printing license may be stored in the storage apparatus 504 of the printing apparatus 120 as a license key or a license file. The license management unit 610 may determine whether or not a comprehensive pull printing license is stored in the storage apparatus 504. Alternatively or in addition, comprehensive pull printing licenses may be managed by the license server 150. The license management unit 610 may query the license server 150 as to whether or not a comprehensive pull printing license has been granted to the printing apparatus 120. The license management unit 610 may determine whether or not a comprehensive pull printing license has been granted to the printing apparatus 120 based on this response. In a case where the license server 150 cannot be accessed, the license management unit 610 may determine that a comprehensive pull printing license has not been granted to the printing apparatus 120. The response from the license server 150 may be cached in the storage apparatus 504 of the printing apparatus 120 for a certain amount of time. The license management unit 610 may determine whether or not a comprehensive pull printing license has been granted to the printing apparatus 120 based on the cached response. In this embodiment, a comprehensive pull printing permission can be directly granted based on a comprehensive pull printing license.

In another embodiment, the license management unit 610 determines whether or not the printing apparatus 120 has a comprehensive pull printing permission based on whether or not a license for executing pull printing has been granted to the printing apparatus 120 for at least one of a plurality of printing services different from the cloud printing service provided by the printing server 130. Hereinafter, a printing service different from the cloud printing service provided by the printing server 130 is referred to as a third-party printing service. Also, a license for using pull printing in a third-party printing service is referred to as a third-party pull printing license. Typically, a third-party pull printing license is granted by the provider of each printing service.

The third-party printing service may include a local printing service provided by the printing server 104. Alternatively or in addition, the third-party printing service may include a cloud printing service provided by the printing server 140.

In this embodiment, the license management unit 610 determines that the printing apparatus 120 has a comprehensive pull printing permission based on at least one third-party pull printing license being granted to the printing apparatus 120. The license management unit 610 determines that the printing apparatus 120 does not have a comprehensive pull printing permission based on not even one third-party pull printing license being granted to the printing apparatus 120. The license management unit 610 may determine whether or not a third-party pull printing license has been granted to the printing apparatus 120 via a method similar to that described above relating to the comprehensive pull printing license. In this embodiment, a comprehensive pull printing permission can be appropriately granted based on a third-party pull printing license even if a comprehensive pull printing license does not exist.

In yet another embodiment, the license management unit 610 determines whether or not the printing apparatus 120 has a comprehensive pull printing permission based on whether or not at least one from among a comprehensive pull printing license and one or more third-party pull printing licenses has been granted to the printing apparatus 120.

In S902, the license management unit 610 of the printing apparatus 120 transmits a message indicating that the printing apparatus 120 has a comprehensive pull printing permission as the capability information of the printing apparatus 120 based on it being determined that the printing apparatus 120 has a comprehensive pull printing permission. Hereinafter, a message indicating that the printing apparatus 120 has a comprehensive pull printing permission is referred to as a permission possession message. The permission possession message may be an Update-Output-Device-Attributes request message specified by the IPP. In the Printer Description Attributes of the Update-Output-Device-Attributes request message, it is indicated that the printing apparatus 120 has a comprehensive pull printing permission. For example, the Update-Output-Device-Attributes request message may include an attribute with the name "release-type". The license management unit 610 may set the value of this attribute to "direct-pull" to indicate that the printing apparatus 120 has a comprehensive pull printing permission. "Direct-pull" indicates that the printing apparatus 120 can execute direct printing and pull printing and cannot execute other methods. Alternatively, the license management unit 610 may set the value of this attribute to a value indicating that the printing apparatus 120 can execute direct printing, secure printing, and pull printing.

The printing server 130 that receives a permission possession message from the printing apparatus 120 allows the printing apparatus 120 to execute printing according to a print job input to a comprehensive logical printer. For example, the printing server 130 may enable an individual logical printer associated with the printing apparatus 120 to be associated with a comprehensive logical printer. Alternatively, the printing server 130 may enable the printing apparatus 120 to be provided with information of a print job input to a comprehensive logical printer.

In S903, the license management unit 610 of the printing apparatus 120 transmits a message indicating that the printing apparatus 120 does not have a comprehensive pull printing permission as the capability information of the printing apparatus 120 based on it being determined that the printing apparatus 120 does not have a comprehensive pull printing permission. Hereinafter, a message indicating that the printing apparatus 120 does not have a comprehensive pull printing permission is referred to as a no permission message. The no permission message may be an Update-Output-Device-Attributes request message specified by the IPP. In the Printer Description Attributes of the Update-Output-Device-Attributes request message, it is indicated that the printing apparatus 120 does not have a comprehensive pull printing permission. For example, the Update-Output-Device-Attributes request message may include an attribute with the name "release-type". The license management unit 610 may set the value of this attribute to "direct-only" to indicate that the printing apparatus 120 does not have a comprehensive pull printing permission. "Direct-only" indicates that the printing apparatus 120 can execute direct printing and cannot execute other methods. Alternatively, the license management unit 610 may set the value of this attribute to a value indicating that the printing apparatus 120 can execute direct printing and secure printing and cannot execute other methods.

The printing server 130 that receives a no permission message from the printing apparatus 120 does not allow the printing apparatus 120 to execute printing according to a print job input to a comprehensive logical printer. For example, the printing server 130 may not associate an individual logical printer associated with the printing apparatus 120 with a comprehensive logical printer. In a case where an individual logical printer is already associated with a comprehensive logical printer, the printing server 130 may disable this association. Since the printing apparatus 120 is not associated with a comprehensive logical printer, the user cannot designate the printing apparatus 120 as the printing apparatus to print the print job input to the comprehensive logical printer. Alternatively, the printing server 130 may not provide the printing apparatus 120 with information of a print job input to a comprehensive logical printer. In this case, since the printing apparatus 120 cannot obtain the print job input to the comprehensive logical printer, the printing apparatus 120 cannot execute printing according to this print job.

An example of another control method for controlling the printing apparatus 120 in such a manner that the control unit 510 of the printing apparatus 120 transmits a message related to permissions of the printing apparatus 120 to the printing server 130 will now be described with reference to FIG. 10. The processes of the method of FIG. 10 may be performed by the CPU 501 of the printing apparatus 120 executing a program loaded into the memory (for example, the RAM 502) of the printing apparatus 120. Alternatively, one or more or all of the processes of the method of FIG. 10 may be performed by a dedicated integrated circuit such as an ASIC. The method of FIG. 10 may be started when the printing apparatus 120 is activated. Alternatively, the method of FIG. 10 may be started when a different event occurs.

In S1001, the license management unit 610 of the printing apparatus 120 determines whether or not a license for providing a comprehensive pull printing permission to the printing apparatus 120 has been granted. In a case where it is determined that a license has been granted ("YES" in S1001), the printing apparatus 120 transitions the processing to S1002. Otherwise, ("NO" in S1001), the printing apparatus 120 repeats S1001.

In an embodiment in which only a comprehensive pull printing license grants a comprehensive pull printing permission to the printing apparatus 120, in S1001, it is determined whether or not a comprehensive pull printing license has been granted. In an embodiment in which only one or more third-party pull printing licenses grant a comprehensive pull printing permission to the printing apparatus 120, in S1001, it is determined whether or not any of the one or more third-party pull printing licenses has been granted. In an embodiment in which a comprehensive pull printing license and one or more third-party pull printing licenses grant a comprehensive pull printing permission to the printing apparatus 120, in S1001, it is determined whether or not any of these licenses has been granted.

In S1002, the license management unit 610 of the printing apparatus 120 determines whether or not the printing apparatus 120 already had a comprehensive pull printing permission before a license is granted in S1001. In a case where it is determined that the printing apparatus 120 already had a comprehensive pull printing permission ("YES" in S1002), the printing apparatus 120 transitions the processing to S1001. In a case where it is determined that the printing apparatus 120 did not have a comprehensive pull printing permission ("NO" in S1002), the printing apparatus 120 transitions the processing to S1003.

In S1002, in a case where it is determined that the printing apparatus 120 still does not have a comprehensive pull printing permission, the printing apparatus 120 is made to have a comprehensive pull printing permission by a license being granted in S1001. Here, in S1003, the license management unit 610 of the printing apparatus 120 transmits a permission possession message similar to that of S902 to the printing server 130 in response to the printing apparatus 120 now having a comprehensive pull printing permission. On the other hand, in S1002, in a case where it is determined that the printing apparatus 120 already had a comprehensive pull printing permission, the license management unit 610 of the printing apparatus 120 does not need to transmit a permission possession message.

In this manner, in S1001 and S1002, the license management unit 610 monitors changes in the comprehensive pull printing permission of the printing apparatus 120 (specifically, a change to having a comprehensive pull printing permission). In an embodiment in which only one license grants a comprehensive pull printing permission to the printing apparatus 120, S1002 is omitted, and in a case where "YES" is determined in S1001, the processing may be transitioned to S1003.

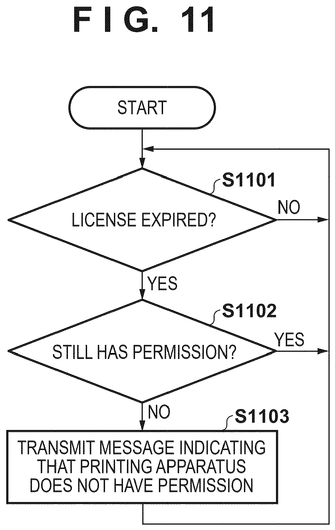

An example of another control method for controlling the printing apparatus 120 in such a manner that the control unit 510 of the printing apparatus 120 transmits a message related to permissions of the printing apparatus 120 to the printing server 130 will now be described with reference to FIG. 11. The processes of the method of FIG. 11 may be performed by the CPU 501 of the printing apparatus 120 executing a program loaded into the memory (for example, the RAM 502) of the printing apparatus 120. Alternatively, one or more or all of the processes of the method of FIG. 11 may be performed by a dedicated integrated circuit such as an ASIC. The method of FIG. 11 may be started when the printing apparatus 120 is activated. Alternatively, the method of FIG. 11 may be started when a different event occurs.

In S1101, the license management unit 610 of the printing apparatus 120 determines whether or not a license for providing a comprehensive pull printing permission to the printing apparatus 120 has expired. In a case where it is determined that the license has expired ("YES" in S1101), the printing apparatus 120 transitions the processing to S1102. Otherwise ("NO" in S1101), the printing apparatus 120 repeats S1101.

In an embodiment in which only a comprehensive pull printing license grants a comprehensive pull printing permission to the printing apparatus 120, in S1101, it is determined whether or not a comprehensive pull printing license has expired. In an embodiment in which only one or more third-party pull printing licenses grant a comprehensive pull printing permission to the printing apparatus 120, in S1101, it is determined whether or not any of the one or more third-party pull printing licenses has expired. In an embodiment in which a comprehensive pull printing license and one or more third-party pull printing licenses grant a comprehensive pull printing permission to the printing apparatus 120, in S1101, it is determined whether or not any of these licenses has expired.

In S1102, the license management unit 610 of the printing apparatus 120 determines whether or not the printing apparatus 120 still has a comprehensive pull printing permission after the license has expired in S1101. In a case where it is determined that the printing apparatus 120 still has a comprehensive pull printing permission ("YES" in S1102), the printing apparatus 120 transitions the processing to S1101. In a case where it is determined that the printing apparatus 120 has lost the comprehensive pull printing permission ("NO" in S1102), the printing apparatus 120 transitions the processing to S1103.

In S1103, the license management unit 610 of the printing apparatus 120 transmits a no permission message similar to that of S903 to the printing server 130 in response to the printing apparatus 120 losing the comprehensive pull printing permission. On the other hand, in S1102, in a case where it is determined that the printing apparatus 120 still has a comprehensive pull printing permission, the license management unit 610 of the printing apparatus 120 does not need to transmit a no permission message.

In this manner, in S1101 and S1102, the license management unit 610 monitors changes in the comprehensive pull printing permission of the printing apparatus 120 (specifically, a change to losing a comprehensive pull printing permission). In an embodiment in which only one license grants a comprehensive pull printing permission to the printing apparatus 120, S1102 is omitted, and in a case where "YES" is determined in S1101, the processing may be transitioned to S1103.

The printing apparatus 120 may execute all of the methods of FIGS. 9 to 11 described above or may execute only a portion of the method. According to the method described above, printing using a logical printer associated with a plurality of printing apparatuses can be restricted to when the user has a permission.

According to some embodiments, printing using a logical printer associated with a plurality of printing apparatuses can be restricted to when the user has a permission.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A printing apparatus (120) that communicates with a printing server system (130) that provides a cloud printing service that receives a print job for a comprehensive logical printer (801) associated with a plurality of printing apparatuses (803a-803c), the printing apparatus (120) comprising:
determination means configured to determine whether the printing apparatus (120) has a permission to execute printing according to a print job input to the comprehensive logical printer (801);
transmission means configured to transmit, as capability information of the printing apparatus (120), a message indicating that the printing apparatus (120) does not have the permission to the printing server system (130), based on a determination that the printing apparatus (120) does not have the permission; and
printing means configured to execute printing according to a print job obtained from the printing server system (130).

2. The printing apparatus according to claim 1, wherein
the transmission means transmits, as capability information of the printing apparatus, a second message indicating that the printing apparatus has the permission to the printing server system, based on a determination that the printing apparatus has the permission.

3. The printing apparatus according to claim 2, further comprising:
monitoring means configured to monitor a change of the permission of the printing apparatus, wherein
the transmission means transmits the second message to the printing server system in response to the printing apparatus gaining the permission.

4. The printing apparatus according to any one of claims 1-3, further comprising:
monitoring means configured to monitor a change of the permission of the printing apparatus, wherein
the transmission means transmits the message to the printing server system in response to the printing apparatus losing the permission.

5. The printing apparatus according to any one of claims 1-4, wherein
the determination means determines whether the printing apparatus has the permission when the printing apparatus is activated.

6. The printing apparatus according to any one of claims 1-5, wherein
the determination means determines whether the printing apparatus has the permission based on whether a license for executing pull printing is granted to the printing apparatus for at least one of a plurality of printing services different from the cloud printing service.

7. The printing apparatus according to claim 6, wherein
the plurality of printing services include a local printing service and a cloud printing service different from the cloud printing service.

8. The printing apparatus according to any one of claims 1-7, wherein
the determination means determines whether the printing apparatus has the permission based on whether a license for executing printing according to a print job input to the comprehensive logical printer (801) is granted to the printing apparatus.

9. The printing apparatus according to any one of claims 1-8, wherein
the message is compliant with Internet Printing Protocol.

10. A method for controlling a printing apparatus (120) that communicates with a printing server system (130) that provides a cloud printing service that receives a print job for a comprehensive logical printer (801) associated with a plurality of printing apparatuses (803a-803c), the method comprising:
determining whether the printing apparatus (120) has a permission to execute printing according to a print job input to the comprehensive logical printer (801);
transmitting as capability information of the printing apparatus (120), a message indicating that the printing apparatus (120) does not have the permission to the printing server system (130), based on a determination that the printing apparatus (120) does not have the permission; and
executing printing according to a print job obtained from the printing server system (130).

11. A computer program comprising instructions which, when the program is executed by a computer, cause the computer to carry out the method of claim 10.

12. A printing server system (130) that provides a cloud printing service that receives a print job for a comprehensive logical printer (801) associated with a plurality of printing apparatuses (803a-803c), the printing server system comprising:
reception means configured to receive, as capability information of the printing apparatus (120), a message indicating that the printing apparatus (120) does not have a permission to execute printing according to a print job input to the comprehensive logical printer (801); and
control means configured to not allow the printing apparatus (120) that transmitted the message to execute printing according to a print job input to the comprehensive logical printer (801).

13. A printing system comprising:
a printing server system (130) configured to provide a cloud printing service that receives a print job for a comprehensive logical printer (801) associated with a plurality of printing apparatuses (803a-803c); and
a printing apparatus (120), wherein
the printing apparatus (120) includes
determination means configured to determine whether the printing apparatus (120) has a permission to execute printing according to a print job input to the comprehensive logical printer (801),
transmission means configured to transmit, as capability information of the printing apparatus (120), a message indicating that the printing apparatus (120) does not have the permission to the printing server system (130), based on a determination that the printing apparatus (120) does not have the permission, and
printing means configured to execute printing according to a print job obtained from the printing server system (130), and
the printing server system (130) includes
control means configured to not allow the printing apparatus (120) that transmitted the message to execute printing according to a print job input to the comprehensive logical printer (801).
